# EUROPEAN PATENT SPECIFICATION

(11) **EP 0 530 662 B1**
(45) Date of publication and mention of the grant of the patent: **03.06.1998**
(21) Application number: 92114550.4
(22) Date of filing: 26.08.1992
(51) Int. Cl.: B32B 27/10, B32B 27/30, B65D 65/46, B65D 5/56

(54) **Easy-to-Recycle laminated material for packaging use**
Leicht wiederverwendbarer Verbundstoff für Verpackungszwecke
Matériau d'emballage stratifié et facilement recyclable

(30) Priority: 04.09.1991 JP 254723/91
(43) Date of publication of application: 10.03.1993
(73) Proprietor: AB Tetra Pak, 221 86 Lund (SE)
(72) Inventor: Bergerioux, Claude, Shizuoka (JP)
(74) Representative: Glawe, Delfs, Moll & Partner

(56) References cited:
- EP-A- 0 010 171
- EP-A- 0 190 776
- US-A- 4 950 510

## Description

The present invention relates to laminated materials for packaging use, which are laminated materials for use of liquid containers using paper as the base material, wherein paper and thermoplastic synthetic resins, such as polyethylene, laminated thereon out of after-use empty containers are easy to recycle.

### [Prior Art]

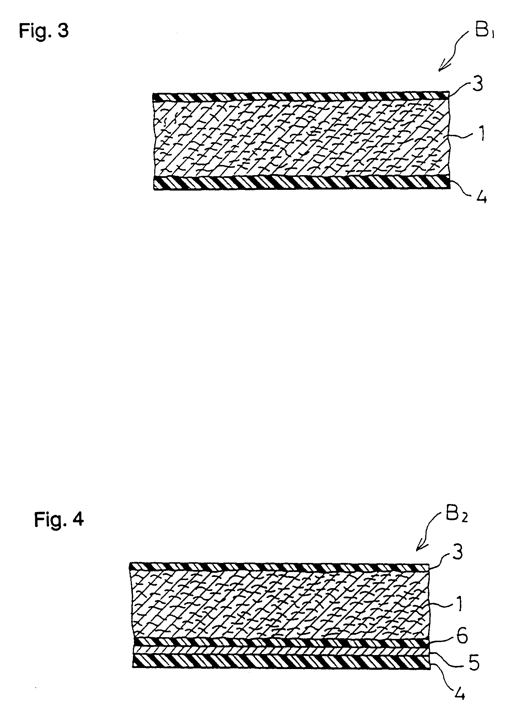

Conventionally paper-made packaging containers so called "pack" containers have been used as those for vending milk, juice and other liquid foods. For ordinary packaging with no need of a long period storage (for example by gable-top, sealed paper containers), laminated materials for packaging with paper used as the major material (packaging web) have been employed for making such containers, and as shown in Fig. 3, on one side of the ordinary supporting body of a paper-board base material layer 1, which makes the outer surface of the container where printing is made, a thin thermoplastic synthetic resin layer 3 comprising polyethylene is directly laminated, while on the other side of the paperboard layer 1, forming the inner surface of the container, a laminated material B1 made of one or two laminated polyethylene layers with a specified thickness is applied as a liquid-resistant layer 4. For the containers for packaging required of a long time storage after sterile filling (ordinarily cubic in form), as shown in Fig. 4, on one side of the supporting body of a paperboard base material layer 1, which makes the outer surface of the container, a thin polyethylene layer 3 is directly laminated similarly as above, while on the other side making the inner surface of the container an aluminium foil layer 5 is formed over an adhesive resin layer 6 (ordinarily polyethylene) and over the aluminium foil layer, in turn, is applied a laminated material B2 which is made by laminating 1 or 2 polyethylene layers to form a liquid-resistant layer 4. Such laminated materials for packaging (packaging webs) B1 and B2 are supplied in the form of a long roll provided with necessary printed information and folding lines to a packaging machine so as to make containers by folding in the machine, which are then filled with liquid foods.

In recent years for the purpose of preventing loss of aroma of the liquid foods to be filled in a packaging container due to its adsorption to the inner surface of the container and of maintaining their rich aroma, such laminated materials for packaging, for example as disclosed by the present inventors in Japanese Patent Publication No. 139334/1990, in which a thin film of such a silicon compound as silicon oxide or silicon nitride is formed on the innermost surface (contacting with the liquid content) of the container, over an aluminium or other metal foil layer. It is also noted that a laminated material for packaging provided with an oil-proof function and capacity to stand to microwave heating of the content so as to prevent occurrence of rents and cracks in the sealed layers, making blank formation possible has been disclosed in, for example, Japanese Patent Laid-Open Publication No. 139339/1989, in which a sealed layer is provided in the form of an oil-proof paper layer on the paperboard base layer.

Recent trend, after wide commercial utilization of the above packaging containers, has been that, from the view point of prevention of environmental disruption by cutting trees for obtaining raw material of packaging containers and of protection of wood resources, used containers are to be recovered for recycling the pulp and polyethylene and other components which are regenerated from the laminated materials (packaging web) composing the containers.

The recycling process of these used empty packaging containers starts ordinarily by washing and shredding them by a shredder irrespectively of their shapes, and the shreds are thrown into the tank containing hot water in the repulper for separating pulp from other components. The agitating wing equipped in the repulper is operated so as to separate the pulp in the paperboard base, material 1 from the polyethylene of the packaging web or from the polyethylene ingredients containing aluminium foil or other components. In this procedure, the shredded packaging web (laminated materials for packaging) is agitated in hot water in the tank of repulper and fibers of the paper from the paperboard base material are loosened and well dispersed, and for their separation from polyethylene and other components the mixture is applied to the filtering apparatus, called screen, which is equipped linking to the repulper or the filter equipped within the repulper to pass selectively the loosened and finely chopped fibers and to collect the polyethylene and other components remaining on the filter unpassed.

### [Problems to be Solved by the Invention]

As explained above, the shredded packaging web (laminated materials for packaging) is agitated in hot water and the pulp constituting the paperboard base material 1 is separated from a thermoplastic resin (3, 4 or 6) (ordinarily polyethylene) that is laminated on both sides of the paperboard base material 1. In this operation hot water permeates into the paperboard base material layer 1 to make the part adhering to the resin (polyethylene) loosen for ready separation, but this loosening requires some time. In addition, after hot water has penetrated into the paperboard base material layer 1, the above resin layer (3, 4 or 6) that is laminated over the paperboard base material layer 1 contains entangled paper fibers with the result of requiring some more time for separation of the paper and resin components. Moreover, as obvious from the above discussion, the separated polyethylene which has been in contact with the paperboard base material layer 1 contains at least about 5% of residual fibers.

EP-A-0 010 171 discloses a laminated material according to the precharacterizing part of claim 1. In this laminated material the watersoluble polyvinyl alcohol layer works as a base layer, and provides the stability of the laminated material. A non water soluble synthetic resin layer is laminated on the inner surface of this thick watersoluble polyvinyl alcohol base layer in order to protect this thick watersoluble base layer from water. Additionally a paper board layer is provided to protect the water soluble base layer from the ambient moisture.

The present invention has been completed for solving the above problems and its objective is to provide laminated materials for packaging with consideration in advance for recycling, wherein the separation of paper in a paper layer (paperboard base material layer) 1 from a thermoplastic resin (polyethylene or others) which is laminated thereon is made easy so as to shorten the time of separation required for recycling, and consideration is also made so that the separated thermoplastic resin (polyethylene) does not contain paper fibers.

The above objects are achieved by a packaging material according to claim 1. The dependent claims are related to further advantageous aspects of the present invention.

For use of packaging for a long time storage after sterile filling, a paperboard base material layer 1 with polyvinylalcohol layers 2, 2 laminated on both sides thereof, like the above case, has a thermoplastic synthetic resin 3 (ordinarily polyethylene) further laminated thinly on the side forming the outer surface of the container. Furthermore, on the surface of the polyvinylalcohol layer 2 on the side forming the inner surface of the container there is provided a liquid-resistant material layer 4 comprising a thermoplastic synthetic resin (ordinarily polyethylene) at the outermost position adjoining the liquid content, and outward thereof there is provided a gas-barrier material layer 5 such as a metal foil (aluminium foil or iron oxide foil) or a gas-barrier synthetic resin film. The lamination of the gas-barrier material layer 5 onto the polyvinylalcohol layer 2 is rendered with a polyethylene layer 6, which is ordinarily used as an adhesive resin, interposed therebetween.

On the other hand, for the laminated materials for packaging with aroma-holding function to hold good flavor and for those with oil-proof function, a paperboard base material layer 1 with polyvinylalcohol layers 2, 2 laminated on both sides thereof respectively, like the above cases, has a thermoplastic synthetic resin 3 (ordinarily polyethylene) further laminated thinly on the side forming the outer surface of the container. The layer 1 also has a multilayer structure containing an aroma-holding, oil-proof or other functional material layer further provided on the side forming the inner surface of the container outwardly of the adhesive resin layer 6 so that the outermost layer is made thermally sealable, for example, by laminating a polyethylene or other layer directly as it is in the case of an aroma-holding material layer, or so doing on the outer side (forming the innermost surface of the container) of oil-proof paper in the case of an oil-proof material layer. In the above description polyethylene is mentioned as the material of the laminated material on the side adjoining the liquid content, but PET or polyamide may also be used instead.

### [Function]

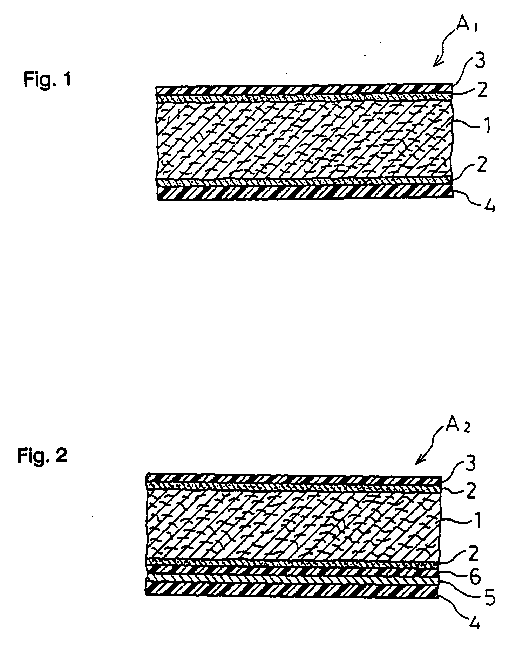

The packaging containers manufactured by using such laminated packaging materials with multilayer structure are filled with liquid contents and used by consumers, and then used containers are collected for recycling and submitted to the regenerating operations. When after washing and shredding, shredded materials are agitated in hot water in the repulper, hot water readily permeates from cut surface into laminated materials to dissolve promptly the polyvinylalcohol layers 2, 2 which are laminated on both sides of the paperboard base material layer 1 so that the thermoplastic synthetic resin layers 3, 4 which are laminated on both side of the layers 2, 2 (see Fig. 1), or such laminated materials (see Fig. 2) as made by laminating the thermoplastic synthetic resin layer 3 and the thermoplastic synthetic resins 4, 6 on and below the aluminium foil layer or other gas-barrier material layer 5, or such multilayer structure as having aroma-holding material layer or oil-proof material layer, outside of the adhesive resin layer 6 can be separated immediately, making the separating operation by agitation prompt. Furthermore, in case of reusing separated thermoplastic synthetic resins (ordinarily polyethylene) in addition to pulp, the resins will not contain residual fibers.

It is noted that lamination of polyvinylalcohol or other water-soluble, thermoplastic resin on the paperboard base material layer 1 eliminates the roughness on the surface of paper on the inner side of container with no printing, with the result of allowing the next laminating materials readily adhered and solidly laminated.

### [Embodiments]

Embodiments of the present invention are described with reference to the accompanying drawings.

Fig. 1 shows a laminated material A1 for packaging to be used, among embodiments of the present invention, for ordinary packaging containers with no need of a long time storage (for example gable-top seal-form paper containers). To make the laminated material A1, polyvinylalcohol layers 2, 2 are laminated on both sides of a paperboard base material 1 in a specified thickness. Polyvinylalcohol is a kind of thermoplastic resin and is usually called as PVA or poval in abbreviation; it is insoluble in ordinary solvents except water showing liquid resistance to organic solvents other than water and is stable to up to about 140°C. It has been used for making water-soluble film. Lamination with polyvinylalcohol (PVA) may be carried out with 0.2 to 10 g of PVA per 1 m² and using more PVA will make separation of the thermoplastic synthetic resin (polyethylene in Embodiment) from the paperboard base easier. In Fig. 1, on the PVA layer 2 on the side of the paperboard base material 1, which forms the outer side of the container bearing printed characters (upper side in the figure) the polyethylene layer 3, as a thermoplastic synthetic resin layer, with a specified thickness is laminated. In this case, printing to the laminated material is ordinarily carried out onto the paperboard base layer 1 before laminating the PVA layer 2 on it, but it is also possible to make printing on the outer surface of the laminated polyethylene layer. On the side forming the inner surface (downside in the figure) a layer 4 of a thermoplastic synthetic resin of polyethylene, as a liquid-resistant material layer, is laminated with a specified thickness (thicker than the above polyethylene layer 3 on the outer side of the container). Formation of this polyethylene layer 4 making the liquid-resistant material layer, may be done by using two of the first and second layers of polyethylene or by combining two kinds of polyethylene, namely linear low-density polyethylene and low-density polyethylene so as to obtain the laminated layer with superior liquid-resistance and prevention from occurrence of cracks. Due to the above laminated PVA layer, the inner surface of the paperboard base material layer 1 becomes smoother by eliminating roughness, and allows lamination of polyethylene over it in stronger adhesion and more closely. The above laminated material A1 allows ready separation of paper and polyethylene in the recycling process and reuse of polyethylene may be done profitably together with that of paper pulp.

Fig. 2 shows a laminated material A2 for packaging for use, among embodiments of the present invention, for packaging containers effective for a long time storage of the content after sterile filling (cubic, brick-form containers). The laminated material A2 is made first by laminating polyvinylalcohol layer (PVA layer) 2 on both sides of the paperboard base material layer 1 with a specified thickness. As in the laminated material A1 described above, the polyethylene layer 3, as a thermoplastic synthetic resin layer, is laminated on the PVA layer 2 on the side of the paperboard base material layer 1, which forms the outer side of the container with printed information (upper side in the figure). On the inner side of the container (downside in the figure) an aluminium foil layer 5 is laminated as a gas-barrier material layer on the PVA layer 2 over the polyethylene layer 6, as an adhesive resin layer, which is formed in between. In place of the aluminium foil layer such gas-barrier synthetic resin films as polyester film, nylon film and polypropylene film, thermoplastic synthetic resin films with superior gas-barrier properties, may be employed. A specified polyethylene layer 4 is also laminated on the surface of the aluminium foil layer 5 as an oil-proof material layer. This polyethylene layer 4 may be formed, as described above, by combining two of the first and second layers, for example, for making the layer more oil-proof and superior in anti-cracking property. The laminated material A2 made by lamination in this way shows so superior gas-barrier property that it is profitable in use for sterile packaging, and at the same time allows in the recycling process easy separation of pulp from other components, namely polyethylene contaminated by aluminium, thus contributing to reuse of the components other than pulp in the fields where polyethylene contaminated by aluminium does not matter in using.

In the embodiments of the present invention water-soluble polyvinylalcohol layers are formed on both sides of the paperboard base material layer 1, below the outer, thermoplastic synthetic resin layers 3 and 4 or 6, but other water-soluble, thermoplastic resins may also be employed instead.

### [Advantage of the Invention]

The laminated material for packaging, which is described in Claim 1 is used for packaging in ordinary "pack" containers milk, juice or other liquid foods which do not require a long time storage, and when the used containers are to be recycled after consumers have consumed the content, it makes the separation of paper from the polyethylene laminated on the paperboard easier in the regenerating process of pulp by separating from the laminated material, making it possible to do the separating operation more promptly, and at the same time it does not allow fibers to remain in the polyethylene or other thermoplastic resins that are separated, so that it is now possible to reuse both of pulp and polyethylene or other synthetic resins efficiently. In addition this invention makes it possible to laminate polyethylene or other thermoplastic resins readily and solidly on the rough surface prior to printing, during manufacturing of the laminated material.

The laminated material for packaging as described in Claim 2 is to be used for packaging in "pack" containers effective for a long time storage of liquid foods after sterile filling, and in recycling the used containers after consumers have consumed the content, it makes separation of paper from polyethylene which are laminated on paperboard and contain aluminium or other components, in the recycling process for separating pulp from the laminated materials, easier and it also makes it possible to reuse the contaminated polyethylene or other components, in addition to pulp, where such contaminated resins may be used.

The laminated material for packaging as described in Claim 3 is to be used for making "pack" containers of liquid foods, which can prevent loss of aroma and keep rich fragrance of them and for making such containers with oil-proof function, and in the recycling process for separating pulp from the laminated material that contains various multilayer structures on the inner side of the paperboard base material layer in contact with the liquid content, it makes the separation of pulp from other components easy so that reuse of the pulp may be done more effectively.

### [Brief Description of the Drawings]

Fig. 1 is a partly enlarged sectional view of an easy-to-recycle laminated material for packaging liquid foods with no need of a long time storage according to the present invention;
Fig. 2 is a partly enlarged sectional view of an easy-to-recycle laminated material for packaging liquid foods with requirement of a long time storage and with gas-barrier property;
Fig. 3 is a partly enlarged sectional view of a conventional laminated material for packaging liquid foods with no need of a long time storage; and
Fig. 4 is a partly enlarged sectional view of a conventional laminated material for packaging liquid foods for a long time storage with gas-barrier property.

### [Notation of Reference Numerals]

- 1:: Paperboard base material layer
- 2:: Polyvinylalcohol (PVA) layer
- 3:: Thermoplastic synthetic resin layer (polyethylene layer)
- 4:: Liquid-resistant material layer comprising a thermoplastic synthetic resin
- 5:: Gas-barrier material layer (aluminium foil layer)
- 6:: Adhesive resin layer (polyethylene layer)

## Claims

1. An easy-to recycle laminated packaging material (A₁) comprising a watersoluble polyvinyl alcohol layer (2), a paperboard layer (1) laminated on an outer surface of the polyvinyl alcohol layer (2), and a liquid-resistant synthetic resin layer (4) laminated on an inner surface of the polyvinyl alcohol layer (2),
**characterized** in that
said paperboard layer (1) is a thick base layer of the laminated packaging material (A₁);
said polyvinyl alcohol layer (2) is a thin auxiliary watersoluble layer in order to separate the thick base paperboard layer (1) from the synthetic resin layer (4) in a repulper;
a thermoplastic synthetic resin layer (3) is provided on an outer side of the base paperboard layer (1); and
a second thin auxiliary watersoluble polyvinyl alcohol layer (2) is laminated between the base paperboard layer (1) and the thermoplastic synthetic resin layer (3) in order to separate the thick base paperboard layer (1) from the thermoplastic synthetic resin layer (3) in the repulper.

2. The easy-to-recycle laminated packaging material (A₁) according to claim 1, wherein
a gas-barrier layer (5) such as a metal foil or a gas-barrier synthetic resin film is provided between the polyvinyl alcohol layer (2) and the liquid-resistant synthetic resin layer (4).

3. The easy-to-recycle laminated packaging material (A₁) according to claim 1, wherein
an adhesive resin layer (6) is provided on the inner surface of the polyvinyl alcohol layer (2); and
an aroma-retentive or oil-resistant layer is provided between the adhesive resin layer (6) and the liquid-resistant synthetic resin layer (4).

## Patentansprüche

1. Leicht wiederverwendbarer Verbundstoff (A₁) für Verpackungszwecke mit einer wasserlöslichen Polyvinylalkoholschicht (2), einer Pappeschicht (1), die auf einer Außenfläche der Polyvinylalkoholschicht (2) aufgeschichtet ist, und einer flüssigkeitsbeständigen synthetischen Harzschicht (4), die auf einer Innenfläche der Polyvinylalkoholschicht (2) aufgeschichtet ist,
dadurch **gekennzeichnet,** daß
die Pappeschicht (1) eine dicke Basisschicht des Verbund-Verpackungsmaterials (A₁) ist;
die Polyvinylalkoholschicht (2) eine dünne wasserlösliche Hilfsschicht ist, um die dicke Basis-Pappeschicht (1) in einer Wiederaufbereitungsvorrichtung von der synthetischen Harzschicht (4) zu separieren;
eine thermoplastische synthetische Harzschicht (3) vorgesehen ist auf einer Außenseite der Basis-Pappeschicht (1); und
eine zweite dünne wasserlösliche Hilfspolyvinylalkoholschicht (2) aufgeschichtet ist zwischen der Basis-Pappeschicht (1) und der thermoplastischen synthetischen Harzschicht (3), um die dicke Basis-Pappeschicht (1) in der Wiederaufbereitungsvorrichtung von der thermoplastischen synthetischen Harzschicht (3) zu separieren.

2. Leicht wiederverwendbarer Verbundstoff (A₁) nach Anspruch 1, wobei
eine Gasbarrierenschicht (5), wie etwa eine Metallfolie oder ein synthetischer Gasbarrierenharzfilm, vorgesehen ist zwischen der Polyvinylalkoholschicht (2) und der flüssigkeitsbeständigen synthetischen Harzschicht (4).

3. Leicht wiederverwendbarer Verbundstoff (A₁) nach Anspruch 1, wobei
eine anhaftende Harzschicht (6) vorgesehen ist auf der inneren Oberfläche der Polyvinylalkoholschicht (2); und
eine geruchszurückhaltende oder ölbeständige Schicht vorgesehen ist zwischen der haftenden Harzschicht (6) und der flüssigkeitsbeständigen synthetischen Harzschicht (4).

## Revendications

1. Matériau d'emballage stratifié facilement recyclable (A₁), comprenant un couche d'alcool polyvinylique (2) soluble dans l'eau, une couche de carton (1) stratifiée sur une surface externe de la couche d'alcool polyvinylique (2), et une couche de résine synthétique (4) résistante aux liquides, stratifiée sur une surface interne de la couche d'alcool polyvinylique (2), caractérisé en ce que
ladite couche de carton (1) est une couche de base épaisse du matériau d'emballage stratifié (A₁) ;
ladite couche d'alcool polyvinylique (2) est une couche auxiliaire mince soluble dans l'eau de façon à séparer la couche de base épaisse en carton (1) de la couche de résine synthétique (4) dans un appareil de désintégration ;
une couche de résine synthétique thermoplastique (3) est disposée sur un côté externe de la couche de base en carton (1) ; et
une seconde couche auxiliaire mince d'alcool polyvinylique (2) soluble dans l'eau est stratifiée entre la couche de base en carton (1) et la couche de résine synthétique thermoplastique (3) de façon à séparer la couche de base épaisse en carton (1) de la couche de résine synthétique thermoplastique (3) dans l'appareil de désintégration.

2. Matériau d'emballage stratifié facilement recyclable (A₁) selon la revendication 1, dans lequel une couche (5) formant une barrière vis-à-vis des gaz, comme une feuille de métal ou un film de résine synthétique faisant barrière aux gaz, est disposée entre la couche d'alcool polyvinylique (2) et la couche de résine synthétique (4) résistante aux liquides.

3. Matériau d'emballage stratifié facilement recyclable (A₁) selon la revendication 1, dans lequel
une couche de résine adhésive (6) est disposée sur la surface interne de la couche d'alcool polyvinylique (2) ; et
une couche retenant les arômes ou résistante à l'huile est disposée entre la couche de résine adhésive (6) et la couche de résine synthétique (4) résistante aux liquides.
